# EUROPEAN PATENT APPLICATION

(11) **EP 3 820 229 A1**
(43) Date of publication of application: **12.05.2021**
(21) Application number: 18927847.6
(22) Date of filing: 26.07.2018
(51) Int. Cl.: H04W 74/00, H04W 74/08

(54) **RESOURCE CONFIGURATION METHOD AND DEVICE, TERMINAL DEVICE AND NETWORK DEVICE**

(71) Applicant: GUANGDONG OPPO MOBILE TELECOMMUNICATIONS CORP., LTD., Dongguan Guangdong 523860 (CN)
(72) Inventor: YOU, Xin, Dongguan, Guangdong 523860 (CN)
(74) Representative: Penza, Giancarlo
(86) International application number: PCT/CN2018/097169
(87) International publication number: WO 2020/019230

(57) **Abstract**

Provided by the embodiments of the present application are a resource configuration method and device, a terminal device and network device, the method comprising: a terminal device receiving first configuration information sent by a network device, the first configuration information comprising resource configuration information of at least one uplink transmission resource, the at least one uplink transmission resource being used to transmit a first message during a random access process, wherein the at least one uplink transmission resource is configured on the basis of the priority level of the random access process.

## Description

### Technical Field

Embodiments of the present application relate to the field of mobile communication technology, in particular to a resource configuration method and device, a terminal device and a network device.

### Background

In the 5th Generation (5G) mobile communication system, a Random Access Procedure (RA procedure) adopts a four-step procedure similar to Long Term Evolution (LTE). However, the four-step random access procedure has a relatively large delay overhead, which is not suitable for the low-delay and high-reliability scenarios in 5G. In a standardization process of New Radio (NR), considering the characteristics of low-delay and high-reliability related services, a solution of two-step random access procedure is proposed, which can reduce access delay compared with the four-step random access procedure.

As to the first step of the two-step random access procedure, MSG1 includes two parts, namely a preamble and MSG3, and MSG3 is sent on a Physical Uplink Shared Channel (PUSCH). It can be seen that PUSCH needs to be sent in the first step of the two-step random access procedure, and a network side needs to pre-configure enough uplink resources for a terminal device to transmit PUSCH. However, since the resources for random access in NR are all configured based on Synchronization Signal Block (SSB), how to save pre-configured resources to avoid waste of resources is a main problem that needs to be solved.

### Summary

Embodiments of the present application provide a resource configuration method and device, a terminal device and a network device.

A resource configuration method according to an embodiment of the present application includes:
receiving, by a terminal device, first configuration information sent by a network device, the first configuration information including resource configuration information of at least one uplink transmission resource, the at least one uplink transmission resource being used for transmitting a first message during a random access procedure, wherein the at least one uplink transmission resource is configured on the basis of a priority of the random access procedure.

A resource configuration method according to an embodiment of the present application includes:
sending, by a network device, first configuration information to a terminal device, the first configuration information including resource configuration information of at least one uplink transmission resource, the at least one uplink transmission resource being used for transmitting a first message during a random access procedure, wherein the at least one uplink transmission resource is configured on the basis of a priority of the random access procedure.

A resource configuration device according to an embodiment of the present application includes:
a receiving unit configured to receive first configuration information sent by a network device, the first configuration information including resource configuration information of at least one uplink transmission resource, the at least one uplink transmission resource being used for transmitting a first message during a random access procedure, wherein the at least one uplink transmission resource is configured on the basis of a priority of the random access procedure.

A resource configuration device according to an embodiment of the present application includes:
a sending unit configured to send first configuration information to a terminal device, the first configuration information including resource configuration information of at least one uplink transmission resource, the at least one uplink transmission resource being used for transmitting a first message during a random access procedure, wherein the at least one uplink transmission resource is configured on the basis of a priority of the random access procedure.

A terminal device according to an embodiment of the present application includes: a processor and a memory. The memory is used for storing a computer program, and the processor is used for calling and running the computer program stored in the memory to execute the resource configuration methods described above.

A network device according to an embodiment of the present application includes a processor and a memory. The memory is used for storing a computer program, and the processor is used for calling and running the computer program stored in the memory to execute the resource configuration methods described above.

A chip according to an embodiment of the present application is used for implementing the resource configuration methods described above.

Specifically, the chip includes: a processor for calling and running a computer program from a memory to enable a device provided with the chip to execute the resource configuration methods described above.

A computer readable storage medium according to an embodiment of the present application is used for storing a computer program that enables a computer to execute the resource configuration methods described above.

A computer program product according to an embodiment of the present application includes computer program instructions that enable a computer to execute the resource configuration methods described above.

A computer program according to an embodiment of the present application enables, when running on a computer, the computer to execute the resource configuration methods described above.

By the above technical solutions, the network side configures an uplink transmission resource based on a priority, the uplink transmission resource are used for transmitting a first message during a random access procedure, when sending the first message, a terminal device may select a corresponding uplink transmission resource based on the priority of the random access procedure to send the first message; and this method of configuring uplink transmission resources based on the priority not only satisfies flexibility of pre-configuration of resources, but also can save overhead for pre-configuration of resources.

### Brief Description of Drawings

The drawings described herein are used to provide a further understanding of the present application and form a part of the present application. Illustrative embodiments of the present application and the description thereof are used to explain the present application and do not constitute an improper limitation of the present application. In the drawings:
FIG. 1 is a schematic diagram of an architecture of a communication system according to an embodiment of the present application.
FIG. 2 is a schematic diagram of a 4-step RACH procedure according to an embodiment of the present application.
FIG. 3 is a schematic diagram of a 2-step RACH procedure according to an embodiment of the present application.
FIG. 4 is a schematic diagram of information transmitted in the first step of the 2-step RACH procedure according to an embodiment of the present application.
FIG. 5 is a first schematic flow diagram of a resource configuration method according to an embodiment of the present application.
FIG. 6 is a second schematic flow diagram of a resource configuration method according to an embodiment of the present application.
FIG. 7 is a first schematic diagram of a structure of a resource configuration device according to an embodiment of the present application.
FIG. 8 is a second schematic diagram of a structure of a resource configuration device according to an embodiment of the present application.
FIG. 9 is a schematic diagram of a structure of a communication device according to an embodiment of the present application.
FIG. 10 is a schematic diagram of a structure of a chip according to an embodiment of the present application.
FIG. 11 is a schematic block diagram of a communication system according to an embodiment of the present application.

### Detailed Description

The technical solutions in the embodiments of the present application will be described below with reference to the drawings of the embodiments of the present application. It is apparent that the embodiments described are just some embodiments of the present application, but not all embodiments of the present application. Based on the embodiments of the present application, all other embodiments obtained by those of ordinary skills in the art without paying an inventive effort are within the protection scope of the present application.

The technical solutions of the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) system, a LTE Time Division Duplex (TDD) system, a Universal Mobile Telecommunication System (UMTS), a Worldwide Interoperability for Microwave Access (WiMAX) communication system, or a 5G system.

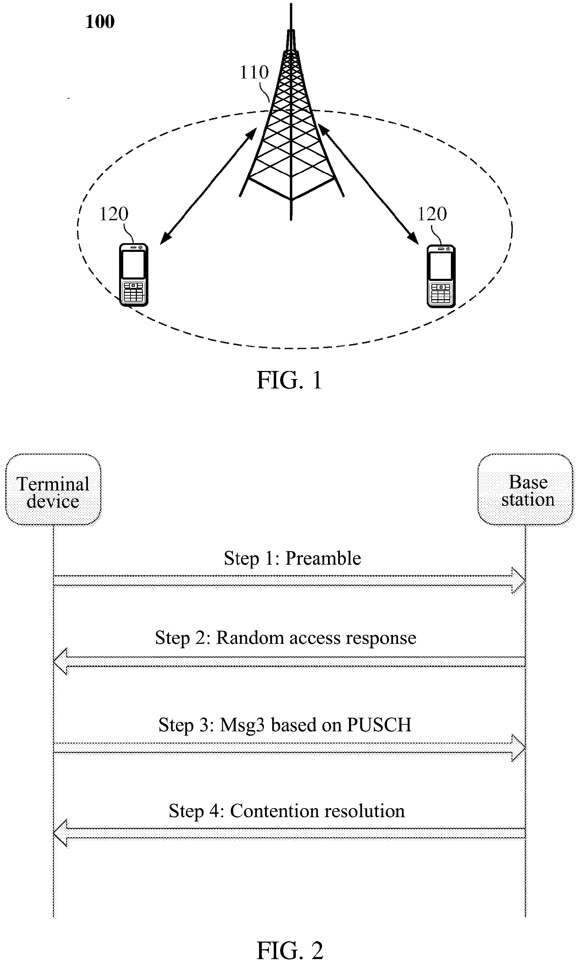

Illustratively, a communication system 100 used in an embodiment of the present application is shown in FIG. 1. The communication system 100 may include a network device 110, and the network device 110 may be a device that communicates with a terminal device 120 (or referred to as a communication terminal, or a terminal). The network device 110 may provide communication coverage for a specific geographical area, and may communicate with terminal devices located within the coverage area. Optionally, the network device 110 may be a Base Transceiver Station (BTS) in a GSM system or CDMA system, a NodeB (NB) in a WCDMA system, an Evolutional Node B (eNB or eNodeB) in a LTE system, or a radio controller in a Cloud Radio Access Network (CRAN), or the network device may be a network side device in a mobile switch center, a relay station, an access point, a vehicle-mounted device, a wearable device, a hub, a switch, a bridge, a router, or a 5G network, or a network device in a future evolved Public Land Mobile Network (PLMN), etc.

The communication system 100 also includes at least one terminal device 120 located within the coverage area of the network device 110. As used herein, the term "terminal device" includes, but is not limited to, a device configured to connect via a wired circuit, for example, via a Public Switched Telephone Network (PSTN), a Digital Subscriber Line (DSL), a digital cable, a direct cable; and/or another data connection/network; and/or via a wireless interface, for instance, for a cellular network, a Wireless Local Area Network (WLAN), a digital television network such as a DVB-H network, a satellite network, and an AM-FM broadcast transmitter; and/or an apparatus, of another terminal device, configured to receive/send a communication signal; and/or an Internet of Things (IoT) device. A terminal device configured to communicate via a wireless interface may be referred to as a "wireless communication terminal", a "wireless terminal" or a "mobile terminal". Examples of the mobile terminal include, but are not limited to, a satellite or cellular telephone, a Personal Communications System (PCS) terminal capable of combining a cellular wireless telephone and data processing, faxing, and data communication abilities, a PDA that may include a radio telephone, a pager, an internet/intranet access, a Web browser, a memo pad, a calendar, and/or a Global Positioning System (GPS) receiver, and a conventional laptop and/or palmtop receiver or another electronic apparatus including a radio telephone transceiver. The terminal device may refer to an access terminal, User Equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal device in a 5G network, or a terminal device in a future evolved PLMN, or the like.

Optionally, terminal direct connection (D2D, Device to Device) communication may be performed between the terminal devices 120.

Optionally, a 5G system or a 5G network may also be called a New Radio (NR) system or an NR network.

FIG. 1 exemplifies one network device and two terminal devices. Optionally, the communication system 100 may include multiple network devices, and another number of terminal devices may be included within the coverage area of each network device, and this is not restricted in an embodiment of the present application.

Optionally, the communication system 100 may further include other network entities such as a network controller and a mobile management entity, and this is not limited in an embodiment of the present application.

It should be understood that devices with a communication function in a network/system may be referred to as communication devices in an embodiment of the present application. Taking the communication system 100 shown in FIG. 1 as an example, communication devices may include a network device 110 and a terminal device 120 which have a communication function, and the network device 110 and the terminal device 120 may be the specific devices described above, which will not be described here again. The communication devices may also include other devices in the communication system 100, e.g., other network entities such as a network controller and a mobile management entity, and this is not restricted in an embodiment of the present application.

It should be understood that the terms "system" and "network" are often used interchangeably herein. The term "and/or" herein is merely an association relationship describing associated objects, indicating that there may be three relationships, for example, A and/or B may indicate three cases: A alone, A and B, and B alone. In addition, the symbol "/" herein generally indicates that objects before and after the symbol "/" have an "or" relationship.

In order to facilitate understanding of the technical solutions of the embodiments of the present application, the four-step random access procedure and the two-step random access procedure are described below.

Referring to FIG. 2, the four-step random access procedure includes four steps, namely: step 1, step 2, step 3, and step 4.

In step 1, a terminal device sends a preamble (i.e., a preamble sequence) to a base station through MSG1 (Message 1), the preamble here is a preamble selected according to the size of MSG3 and an SSB index.

In step 2, after detecting the preamble sent by the terminal device, the base station sends a Random Access Response (RAR) to the terminal device through MSG2 (Message 2) to inform the terminal device of uplink resource information which can be used for sending MSG3 (Message 3), allocates a Radio Network Temporary Identity (RNTI) to the terminal device, and provides the terminal device with a time advance command, etc..

In step 3, after receiving the random access response, the terminal device sends an MSG3 message in an uplink resource specified by a random access response message, the MSG3 message carrying terminal device-specific temporary identity information.

In step 4, the base station sends a contention resolution message to the terminal device through MSG4 (Message 4), and allocates an uplink transmission resource to the terminal device. When receiving MSG4 sent by the base station, the terminal device may detect whether the terminal device-specific temporary identity sent by the terminal device on MSG3 is included in the contention resolution message sent by the base station. If so, it indicates that the random access procedure of the terminal device has succeeded; otherwise, it is considered that the random access procedure has failed, and the terminal device needs to start a random access procedure from step 1 again.

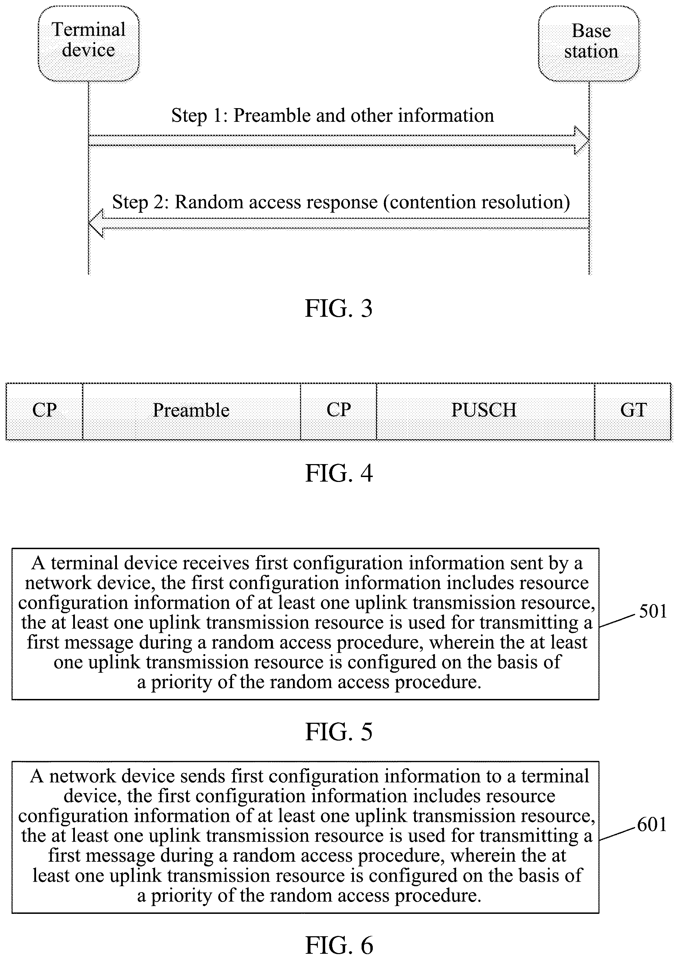

The delay overhead of the four-step random access procedure is relatively large. In the process of NR standardization, considering the characteristics of low-delay and high-reliability related services, a solution of two-step random access procedure is proposed, which can reduce access delay compared with the four-step random access procedure. Referring to FIG. 3, the two-step random access procedure includes two steps, namely, step 1 and step2.

In step 1, a terminal device sends a preamble (i.e., a preamble sequence) and other information to a base station through MSG1.

Here, other information may also be referred to as uplink data, which is sent through a Physical Uplink Shared Channel (PUSCH), e.g., terminal device-specific temporary identity information and MSG3.

In step 2, after detecting the preamble and PUSCH sent by the terminal device, the base station sends a random access response message and a contention resolution message to the terminal device through MSG2.

In the two-step random access procedure, step 1 and step 3 of the four-step random access procedure have been combined as step 1 of the two-step random access procedure, and step 2 and step 4 of the four-step random access procedure have been combined as step 2 of the two-step random access procedure. Therefore, in step 1 of the two-step RACH, the terminal device needs to send a Preamble and a PUSCH. As shown in FIG. 4, a Cyclic Prefix (CP) is set before the preamble and between the preamble and the PUSCH, and a Guaranteed Time (GT) is set after the PUSCH.

FIG. 5 is a first schematic flow diagram of a resource configuration method according to an embodiment of the present application. As shown in FIG. 5, the resource configuration method includes the following step 501.

In Step 501, a terminal device receives first configuration information sent by a network device, the first configuration information includes resource configuration information of at least one uplink transmission resource, the at least one uplink transmission resource is used for transmitting a first message during a random access procedure, wherein the at least one uplink transmission resource is configured on the basis of a priority of the random access procedure.

In an embodiment of the present application, the terminal device may be any device that can communicate with a network device, such as a mobile phone, a tablet computer, a notebook computer, and a vehicle-mounted terminal.

In an embodiment of the present application, the network device may be a base station, e.g., gNB in 5G, eNB in LTE, etc.

In an embodiment of the present application, the terminal device may execute the two-step random access procedure (referring to FIG. 3), and may also execute the four-step random access procedure (referring to FIG. 2).

In an implementation mode, in order to reduce the delay, the terminal device needs to execute the two-step random access procedure (referring to FIG. 3). For this reason, the terminal device needs to send a preamble and MSG3 to a network device through the first message (i.e., MSG1) in step 1. Preamble is transmitted through PRACH and MSG3 is transmitted through PUSCH. MSG3 is mainly used to inform the network of which event triggers the random access procedure. For example, if the random access procedure is triggered by an initial access, a UE ID and an establishment cause are carried in MSG3; and if the random access procedure is triggered by RRC reestablishment, a connected state UE ID and an establishment cause are carried in MSG3.

In an embodiment of the present application, the transmission of the preamble part in the first message is based on a PRACH resource, and the transmission of the PUSCH part in the first message is based on an uplink transmission resource. In an implementation mode, the terminal device receives, through a system message, first configuration information sent by the network device, and the first configuration information includes at least one uplink transmission resource. In another implementation mode, the terminal device receives, through dynamic signaling or semi-static signaling, the first configuration information sent by the network device, and the first configuration information includes at least one uplink transmission resource.

Here, the configuration of each uplink transmission resource includes at least one of a time domain resource, a frequency domain resource, and a code domain resource. In an implementation mode, the first configuration information includes index information of at least one uplink transmission resource in a resource table. The resource table here includes a correspondence relationship between configurations and index information of multiple resources. In another implementation mode, the first configuration information includes configurations corresponding to at least one uplink transmission resource, e.g., a time domain resource, a frequency domain resource, and a code domain resource.

In an embodiment of the present application, uplink transmission resources are configured based on the priority of the random access procedure. Specifically, the network side configures at least one uplink transmission resource based on the priority of the random access procedure, and generates first configuration information based on the configuration and sends the first configuration information to the terminal device, to enable the terminal device to determine a target uplink transmission resource corresponding to a target random access procedure (e.g., a random access procedure currently triggered) based on the priority of the target random access procedure and the first configuration information. The terminal device sends the first message by using the target uplink transmission resource.

In an implementation mode, the priority of the random access procedure is determined based on at least one of a random access event, a delay parameter, and a service type.

For example, the priority of a random access procedure triggered by an RRC connection establishment event is the priority x1, and the priority of a random access procedure triggered by an uplink synchronization event is the priority x2.

For example, the priority of the random access procedure of a high-delay service is the priority y1, and the priority of the random access procedure of a low-delay service is the priority y2.

For example, the priority of the random access procedure of a voice service is the priority z1, and the priority of the random access procedure of an Internet service is the priority z2.

After the priority of the random access procedure is determined, the terminal device selects an uplink transmission resource corresponding to the priority of the current random access procedure from at least one uplink transmission resource configured by the first configuration information, and transmits the PUSCH part (i.e., MSG3) in MSG1 by using the uplink transmission resource.

In an implementation mode, the first configuration information has a correspondence relationship with synchronization signal blocks and/or Channel State Information Reference Signals (CSI-RS). Since beams have a correspondence relationship with synchronization signal blocks and/or CSI-RSs, the correspondence relationship between beams and the first configuration information is also the correspondence relationship between synchronization signal blocks and/or CSI-RSs and the first configuration information. Specifically, the first configuration information is configured based on beams for configuring granularity, for example, beam1 corresponds to one piece of first configuration information, and beam2 corresponds to another piece of first configuration information. If the terminal device initiates a random access procedure based on beam1, the terminal device transmits the PUSCH part in MSG1 by using an uplink transmission resource which is configured by the first configuration information. If the terminal device initiates a random access procedure based on beam2, the terminal device transmits the PUSCH part in MSG1 by using an uplink transmission resource which is configured by second configuration information. The correspondence relationship between beams and the first configuration information is not limited to the above one-to-one relationship, but may also be one-to-many or many-to-many relationship. For example, beam1 corresponds to multiple pieces of first configuration information. In this case, if the terminal device initiates a random access procedure based on beam1, the terminal device may select, from the multiple pieces of first configuration information, a corresponding uplink transmission resource according to the priority of the random access procedure to transmit the PUSCH part in MSG1. In another example, beam1, beam2 and beam3 may share a resource pool which may be configured by a separate piece of first configuration information or by multiple pieces of first configuration information respectively. When the terminal device initiates a random access procedure based on any one of the three beams, it can select a corresponding uplink transmission resource in the resource pool according to the priority of the random access procedure to transmit the PUSCH part in MSG1.

In an implementation mode, the first configuration information is configured based on Bandwidth Part (BWP) for configuring granularity, for example, BWP1 corresponds to a piece of first configuration information and BWP2 corresponds to another piece of first configuration information. If the terminal device initiates a random access procedure on BWP1, the terminal device transmits the PUSCH part in MSG1 by using an uplink transmission resource configured by the first configuration information. If the terminal device initiates a random access procedure on BWP2, the terminal device transmits the PUSCH part in MSG1 by using an uplink transmission resource configured by second configuration information. The correspondence relationship between BWPs and the first configuration information is not limited to the above one-to-one relationship, but can also be one-to-many or many-to-many relationship, and the one-to-many or many-to-many relationship is the same as the case with beams.

In an implementation mode, the first message includes a first preamble, and the priority of the random access procedure has a correspondence relationship with the first preamble. The terminal device can determine the priority of a random access procedure based on a random access event, and then determine a first preamble based on the priority of the random access procedure. Since the first preamble has an association relationship with an uplink transmission resource, the priority of the random access procedure has a correspondence relationship with the uplink transmission resource. After the terminal device determines an uplink transmission resource, in step 1 of the two-step RACH procedure, the terminal device transmits the PUSCH part in MSG1 by using the uplink transmission resource.

FIG. 6 is a second schematic flow diagram of a resource configuration method according to an embodiment of the present application. As shown in FIG. 6, the resource configuration method includes the following step 601.

In Step 601, a network device sends first configuration information to a terminal device, the first configuration information includes resource configuration information of at least one uplink transmission resource, the at least one uplink transmission resource being used for transmitting a first message during a random access procedure, wherein the at least one uplink transmission resource is configured on the basis of a priority of the random access procedure.

In an embodiment of the present application, the network device may be a base station, e.g., gNB in 5G, eNB in LTE, etc.

In an embodiment of the present application, the terminal device may be any device that can communicate with a network device, such as a mobile phone, a tablet computer, a notebook computer, and a vehicle-mounted terminal.

In an embodiment of the present application, the terminal device may execute the two-step random access procedure (referring to FIG. 3), or may also execute the four-step random access procedure (referring to FIG. 2).

In an implementation mode, in order to reduce the delay, the terminal device needs to execute the two-step random access procedure (referring to FIG. 3). For this reason, the terminal device needs to send a preamble and MSG3 to a network device through the first message (i.e., MSG1) in step 1. Preamble is transmitted through PRACH and MSG3 is transmitted through PUSCH. MSG3 is mainly used to inform the network what event triggers the random access procedure. For example, if the random access procedure is triggered by an initial access, a UE ID and an establishment cause are carried in MSG3; and if the random access procedure is triggered by an RRC reestablishment, a connected state UE ID and an establishment cause are carried in MSG3.

In an embodiment of the present application, the transmission of the preamble part in the first message is based on a PRACH resource, and the transmission of the PUSCH part in the first message is based on an uplink transmission resource. In an implementation mode, the terminal device receives, through a system message, first configuration information sent by the network device, and the first configuration information includes at least one uplink transmission resource. In another implementation mode, the terminal device receives, through dynamic signaling or semi-static signaling, the first configuration information sent by the network device, and the first configuration information includes at least one uplink transmission resource.

Here, the configuration of each uplink transmission resource includes at least one of a time domain resource, a frequency domain resource and a code domain resource. In an implementation mode, the first configuration information includes index information of at least one uplink transmission resource in a resource table. The resource table here includes a correspondence relationship between configurations and index information of multiple resources. In another implementation mode, the first configuration information includes configurations corresponding to at least one uplink transmission resource, e.g., a time domain resource, a frequency domain resource and a code domain resource.

In an embodiment of the present application, uplink transmission resources are configured based on the priority of the random access procedure. Specifically, the network side configures at least one uplink transmission resource based on the priority of the random access procedure, and generates first configuration information based on the configuration and sends the first configuration information to the terminal device, to enable the terminal device to determine a target uplink transmission resource corresponding to a target random access procedure (e.g., the random access procedure currently triggered) based on the priority of the target random access procedure and the first configuration information. The terminal device sends the first message by using the target uplink transmission resource.

In an implementation mode, the priority of the random access procedure is determined based on at least one of a random access event, a delay parameter, and a service type.

For example, the priority of a random access procedure triggered by an RRC connection establishment event is the priority x1, and the priority of a random access procedure triggered by an uplink synchronization event is the priority x2.

For example, the priority of the random access procedure of a high-delay service is the priority y1, and the priority of the random access procedure of a low-delay service is the priority y2.

For example, the priority of the random access procedure of a voice service is the priority z1, and the priority of the random access procedure of an Internet service is the priority z2.

After the priority of the random access procedure is determined, the terminal device selects an uplink transmission resource corresponding to the priority of the current random access procedure from at least one uplink transmission resource configured by the first configuration information, and transmits the PUSCH part (i.e., MSG3) in MSG1 by using the uplink transmission resource.

In an implementation mode, the first configuration information has a correspondence relationship with synchronization signal blocks and/or CSI-RSs. Since beams have a correspondence relationship with synchronization signal blocks and/or CSI-RSs, the correspondence relationship between beams and the first configuration information is also the correspondence relationship between synchronization signal blocks and/or CSI-RSs and the first configuration information. Specifically, the first configuration information is configured based on beams for configuring granularity, for example, beam1 corresponds to one piece of first configuration information, and beam2 corresponds to another piece of first configuration information. If the terminal device initiates a random access procedure based on beam1, the terminal device transmits the PUSCH part in MSG1 by using an uplink transmission resource which is configured by the first configuration information. If the terminal device initiates a random access procedure based on beam2, the terminal device transmits the PUSCH part in MSG1 by using an uplink transmission resource which is configured by second configuration information. The correspondence relationship between beams and the first configuration information is not limited to the above one-to-one relationship, but may also be one-to-many or many-to-many relationship. For example, beam1 corresponds to multiple pieces of first configuration information. In this case, if the terminal device initiates a random access procedure based on beam1, the terminal device may select, from the multiple pieces of first configuration information, a corresponding uplink transmission resource according to the priority of the random access procedure to transmit the PUSCH part in MSG1. In another example, beam1, beam2 and beam3 may share a resource pool which may be configured by a separate piece of first configuration information or by multiple pieces of first configuration information respectively. When the terminal device initiates a random access procedure based on any one of the three beams, it can select a corresponding uplink transmission resource in the resource pool according to the priority of the random access procedure to transmit the PUSCH part in MSG1.

In an implementation mode, the first configuration information is configured based on Bandwidth Part (BWP) for configuring granularity, for example, BWP1 corresponds to a piece of first configuration information and BWP2 corresponds to another piece of first configuration information. If the terminal device initiates a random access procedure on BWP1, the terminal device transmits the PUSCH part in MSG1 by using an uplink transmission resource configured by the first configuration information. If the terminal device initiates a random access procedure on BWP2, the terminal device transmits the PUSCH part in MSG1 by using an uplink transmission resource configured by second configuration information. The correspondence relationship between BWPs and the first configuration information is not limited to the above one-to-one relationship, but can also be one-to-many or many-to-many relationship, and the one-to-many or many-to-many relationship is the same as the case with beams.

In an implementation mode, the first message includes a first preamble, and the priority of the random access procedure has a correspondence relationship with the first preamble. The terminal device can determine the priority of a random access procedure based on a random access event, and then determine a first preamble based on the priority of the random access procedure. Since the first preamble has an association relationship with an uplink transmission resource, the priority of the random access procedure has a correspondence relationship with the uplink transmission resource. After the terminal device determines an uplink transmission resource, in step 1 of the two-step RACH procedure, the terminal device transmits the PUSCH part in MSG1 by using the uplink transmission resource.

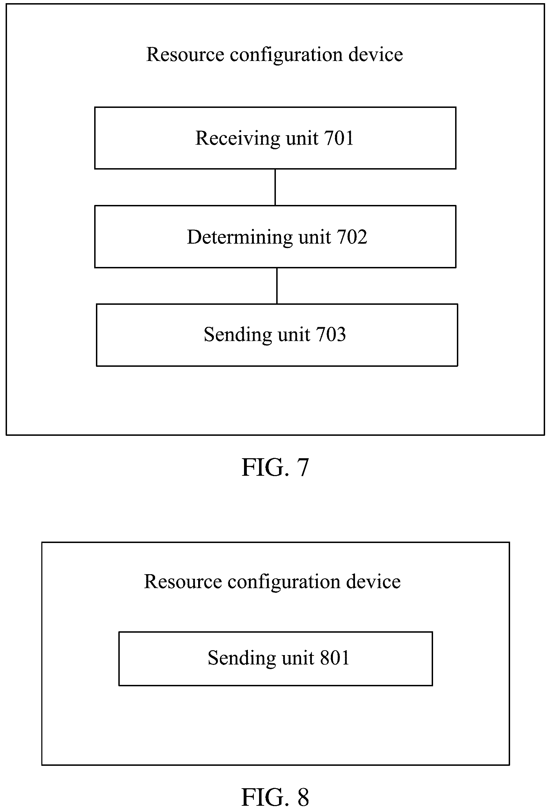

FIG. 7 is a first schematic diagram of a structure of a resource configuration device according to an embodiment of the present application. As shown in FIG. 7, the device includes a receiving unit 701.

The receiving unit 701 is configured to receive first configuration information sent by a network device, the first configuration information includes resource configuration information of at least one uplink transmission resource, the at least one uplink transmission resource is used for transmitting a first message during a random access procedure, wherein the at least one uplink transmission resource is configured on the basis of a priority of the random access procedure.

In an implementation mode, the priority of the random access procedure is determined based on at least one of a random access event, a delay parameter, and a service type.

In an implementation mode, the first configuration information has a correspondence relationship with synchronization signal blocks and/or CSI-RS.

In an implementation mode, the first message includes a first preamble, and the priority of the random access procedure has a correspondence relationship with the first preamble.

In an implementation mode, the first message further includes the uplink transmission resource, the uplink transmission resource is used for transmitting a first uplink data channel.

In an implementation mode, the device further includes: a determining unit 702 and a sending unit 703.

The determining unit 702 is configured to determine a target uplink transmission resource corresponding to a target random access procedure based on the priority of the target random access procedure and the first configuration information.

The sending unit 703 is configured to send the first message by using the target uplink transmission resource.

In an implementation mode, the receiving unit 701 is configured to receive the first configuration information sent by the network device, through a system message.

In an implementation mode, the receiving unit 701 is configured to receive the first configuration information sent by the network device, through dynamic signaling or semi-static signaling.

Those skilled in the art should understand that the relevant description of the resource configuration device of an embodiment of the present application may be understood with reference to the relevant description of the resource configuration method of an embodiment of the present application.

FIG. 8 is a second schematic diagram of a structure of a resource configuration device according to an embodiment of the present application. As shown in FIG. 8, the device includes a sending unit 801.

The sending unit 801 is configured to send first configuration information to a terminal device, the first configuration information including resource configuration information of at least one uplink transmission resource, the at least one uplink transmission resource is used for transmitting a first message during a random access procedure, wherein the at least one uplink transmission resource is configured on the basis of a priority of the random access procedure.

In an implementation mode, the priority of the random access procedure is determined based on at least one of a random access event, a delay parameter, and a service type.

In an implementation mode, the first configuration information has a correspondence relationship with synchronization signal blocks and/or CSI-RS.

In an implementation mode, the first message includes a first preamble, and the priority of the random access procedure has a correspondence relationship with the first preamble.

In an implementation mode, the first message further includes the uplink transmission resource, the uplink transmission resource is used for transmitting a first uplink data channel.

In an implementation mode, the first configuration information is used for the terminal device to determine a target uplink transmission resource corresponding to a target random access procedure based on a priority of the target random access procedure, and send the first message by using the target uplink transmission resource.

In an implementation mode, the sending unit 801 is configured to send the first configuration information to the terminal device through a system message.

In an implementation mode, the sending unit 801 is configured to send the first configuration information to the terminal device through dynamic signaling or semi-static signaling.

Those skilled in the art should understand that the relevant description of the resource configuration device of an embodiment of the present application may be understood with reference to the relevant description of the resource configuration method of an embodiment of the present application.

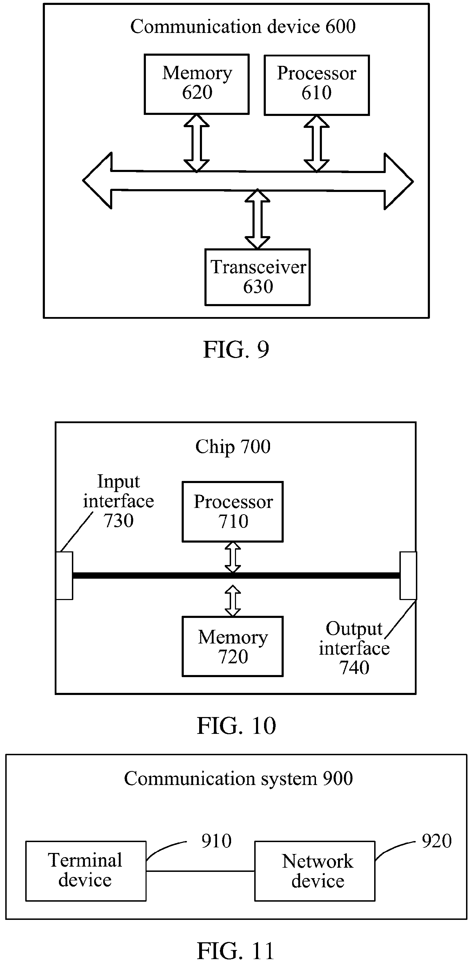

FIG. 9 is a schematic diagram of a structure of a communication device 600 according to an embodiment of the present application. The communication device can be a terminal device or a network device. The communication device 600 shown in FIG. 9 includes a processor 610 that can call and run a computer program from a memory to implement the methods in embodiments of the present application.

Optionally, as shown in FIG. 9, the communication device 600 may further include a memory 620. The processor 610 may call and run a computer program from the memory 620 to implement the methods in embodiments of the present application.

The memory 620 may be a separate device independent of the processor 610 or may be integrated in the processor 610.

Optionally, as shown in FIG. 9, the communication device 600 may further include a transceiver 630, and the processor 610 may control the transceiver 630 to communicate with other devices. Specifically, the transceiver 630 may send information or data to other devices or receive information or data sent by other devices.

The transceiver 630 may include a transmitter and a receiver. The transceiver 630 may further include antennas, and the number of antennas may be one or more.

Optionally, the communication device 600 may be specifically a network device of an embodiment of the present application, and the communication device 600 may implement the corresponding processes implemented by the network device in various methods of embodiments of the present application, which will not be repeated here for brevity.

Optionally, the communication device 600 may be specifically a mobile terminal/terminal device of an embodiment of the present application, and the communication device 600 may implement the corresponding processes implemented by the mobile terminal/terminal device in various methods of embodiments of the present application, which will not be repeated here for brevity.

FIG. 10 is a schematic diagram of a structure of a chip according to an embodiment of the present application. A chip 700 shown in FIG. 10 includes a processor 710. The processor 710 may call and run a computer program from a memory to implement the methods in embodiments of the present application.

Optionally, as shown in FIG. 10, the chip 700 may further include a memory 720. The processor 710 may call and run a computer program from the memory 720 to implement the methods in embodiments of the present application.

The memory 720 may be a separate device independent of the processor 710 or may be integrated in the processor 710.

Optionally, the chip 700 may further include an input interface 730. The processor 710 may control the input interface 730 to communicate with other devices or chips, specifically, information or data sent by other devices or chips may be acquired.

Optionally, the chip 700 may further include an output interface 740. The processor 710 may control the output interface 740 to communicate with other devices or chips, specifically, information or data may be output to other devices or chips.

Optionally, the chip may be applied to a network device of an embodiment of the present application, and the chip may implement the corresponding processes implemented by the network device in various methods of embodiments of the present application, which will not be repeated here for brevity.

Optionally, the chip may be applied to a mobile terminal/terminal device of an embodiment of the present application, and the chip may implement the corresponding processes implemented by the mobile terminal/terminal device in various methods of embodiments of the present application, which will not be repeated here for brevity.

It should be understood that the chip mentioned in an embodiment of the present application may be referred to as a system-level chip, a system chip, a chip system, a system-on-chip, or the like.

FIG. 11 is a schematic block diagram of a communication system 900 according to an embodiment of the present application. As shown in FIG. 9, the communication system 900 includes a terminal device 910 and a network device 920.

Herein, the terminal device 910 may be configured to implement the corresponding functions implemented by the terminal device in the above-mentioned methods, and the network device 920 may be configured to implement the corresponding functions implemented by the network device in the above-mentioned methods, which will not be repeated here for brevity.

It should be understood that the processor in an embodiment of this application may be an integrated circuit chip having a signal processing capability. In an implementation process, the steps of the foregoing method embodiments may be implemented by an integrated logic circuit of hardware in the processor or instructions in a form of software. The processor may be a general purpose processor, a Digital Signal Processor (DSP), an Application Specific Integrated Circuit (ASIC), a Field Programmable Gate Array (FPGA) or another programmable logic device, a discrete gate or a transistor logic device, or a discrete hardware component. The processor may implement or execute methods, steps and logical block diagrams disclosed in the embodiments of this application. The general purpose processor may be a microprocessor, or the processor may be any conventional processor or the like. The steps of the methods disclosed with reference to the embodiments of this application may be directly implemented by a hardware decoding processor, or may be implemented by a combination of hardware and software modules in the decoding processor. The software modules may be located in a storage medium commonly used in the art, such as a random access memory, a flash memory, a read-only memory, a programmable read-only memory or an electrically erasable programmable memory, or a register. The storage medium is located in a memory, and the processor reads the information in the memory and completes the steps of the above methods in combination with its hardware.

It may be understood that the memory in embodiment of this application may be a volatile memory or a non-volatile memory, or may include both a volatile memory and a non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM) which serves as an external cache. By way of exemplary but not restrictive illustrations, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory in the systems and methods described here is intended to include, but is not limited to, these and any other suitable types of memories.

It should be understood that the foregoing memory is an example for illustration, but is not for limiting. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), or the like. That is, memories in the embodiments of the present application are intended to include, but are not limited to, these and any other suitable types of memories.

An embodiment of the present application further provides a computer readable storage medium for storing a computer program.

Optionally, the computer readable storage medium may be applied to a network device of an embodiment of the present application, and the computer program enables a computer to execute the corresponding processes implemented by the network device in various methods of the embodiments of the present application, which will not be repeated here for brevity.

Optionally, the computer readable storage medium may be applied to a mobile terminal/terminal device of an embodiment of the present application, and the computer program enables a computer to execute the corresponding processes implemented by the mobile terminal/terminal device in various methods of the embodiments of the present application, which will not be repeated here for brevity.

An embodiment of the present application further provides a computer program product including computer program instructions.

Optionally, the computer program product may be applied to a network device of an embodiment of the present application, and the computer program instruction enables a computer to execute the corresponding processes implemented by the network device in various methods of the embodiments of the present application, which will not be repeated here for brevity.

Optionally, the computer program product may be applied to a mobile terminal/terminal device of an embodiment of the present application, and the computer program instructions enable a computer to execute the corresponding processes implemented by the mobile terminal/terminal device in various methods of the embodiments of the present application, which will not be repeated here for brevity.

An embodiment of the present application further provides a computer program.

Optionally, the computer program may be applied to a network device of an embodiment of the present application. When running on a computer, the computer program enables the computer to execute the corresponding processes implemented by the network device in various methods of the embodiments of the present application, which will not be repeated here for brevity.

Optionally, the computer program may be applied to a mobile terminal/terminal device of an embodiment of the present application. When running on a computer, the computer program enables the computer to execute the corresponding processes implemented by the mobile terminal/terminal device in various methods of the embodiments of the present application, which will not be repeated here for brevity.

Those of ordinary skills in the art may recognize that the exemplary units and algorithm steps described in combination with the embodiments disclosed herein may be implemented in electronic hardware, or a combination of computer software and electronic hardware. Whether these functions are implemented in hardware or software depends on the specific application and design constraints of the technical solutions. Professional technicians may use different methods to implement the described functions in respect to each particular application, but such implementation should not be considered to be beyond the scope of the present application.

Those skilled in the art may clearly understand that for convenience and conciseness of description, as to the specific working processes of the systems, apparatuses and units described above, reference may be made to the corresponding processes in the method embodiments, which will not be repeated here.

In several embodiments provided by the present application, it should be understood that the disclosed systems, apparatuses and methods may be implemented in other ways. For example, the apparatus embodiments described above are only illustrative, for example, the division of the units is only a logical function division, and there may be other division manners in actual implementation, for example, multiple units or components may be combined or integrated into another system, or some features may be ignored or not executed. On the other hand, the mutual coupling or direct coupling or communication connection shown or discussed may be indirect coupling or communication connection of apparatuses or units through some interfaces, and may be in electrical, mechanical or other forms.

The unit described as a separate component may or may not be physically separated, and the component shown as a unit may or may not be a physical unit, i.e., it may be located in one place or may be distributed over multiple network units. Some or all of the units may be selected according to actual needs to achieve the objects of the solutions of the embodiments.

In addition, various functional units in various embodiments of the present application may be integrated in one processing unit, or the various units may be physically present separately, or two or more units may be integrated in one unit.

The functions may be stored in a computer readable storage medium if realized in a form of software functional units and sold or used as a separate product. Based on this understanding, the technical solution of the present application, in essence, or the part contributing to the prior art, or the part of the technical solution, may be embodied in the form of a software product stored in a storage medium, including a number of instructions for enabling a computer device (which may be a personal computer, a server, or a network device and the like) to perform all or part of the acts of the methods described in various embodiments of the present application. The storage medium includes various mediums capable of storing program codes, such as a USB flash disk, a removable hard disk, a Read-Only Memory (ROM), a Random Access Memory (RAM), a magnetic disk, or an optical disk.

What are described above are merely exemplary implementation modes of the present application, but the protection scope of the present application is not limited thereto. Any variation or substitution that may be easily conceived by a person skilled in the art within the technical scope disclosed by the present application shall be included within the protection scope of the present application. Therefore, the protection scope of the present application shall be subject to the protection scope of the claims.

## Claims

1. A resource configuration method, comprising:
receiving, by a terminal device, first configuration information sent by a network device, the first configuration information comprising resource configuration information of at least one uplink transmission resource, the at least one uplink transmission resource being used for transmitting a first message during a random access procedure, wherein the at least one uplink transmission resource is configured based on a priority of the random access procedure.

2. The method according to claim 1, wherein the priority of the random access procedure is determined based on at least one of a random access event, a delay parameter, and a service type.

3. The method according to claim 1 or 2, wherein the first configuration information has a correspondence relationship with synchronization signal blocks and/or channel state information reference signals (CSI-RS).

4. The method according to any one of claims 1-3, wherein the first message comprises a first preamble, and the priority of the random access procedure has a correspondence relationship with the first preamble.

5. The method according to claim 4, wherein the first message further comprises the uplink transmission resource, the uplink transmission resource is used for transmitting a first uplink data channel.

6. The method according to any one of claims 1-5, wherein the method further comprises:
determining, by the terminal device, a target uplink transmission resource corresponding to a target random access procedure based on the priority of the target random access procedure and the first configuration information; and
sending, by the terminal device, the first message by using the target uplink transmission resource.

7. The method according to any one of claims 1-6, wherein receiving, by the terminal device, the first configuration information sent by the network device comprises:
receiving, by the terminal device, through a system message, the first configuration information sent by the network device.

8. The method according to any one of claims 1-6, wherein receiving, by the terminal device, the first configuration information sent by the network device comprises:
receiving, by the terminal device, through dynamic signaling or semi-static signaling, the first configuration information sent by the network device.

9. A resource configuration method, comprising:
sending, by a network device, first configuration information to a terminal device, the first configuration information comprising resource configuration information of at least one uplink transmission resource, the at least one uplink transmission resource being used for transmitting a first message during a random access procedure, wherein the at least one uplink transmission resource is configured based on a priority of the random access procedure.

10. The method according to claim 9, wherein the priority of the random access procedure is determined based on at least one of a random access event, a delay parameter, and a service type.

11. The method according to claim 9 or 10, wherein the first configuration information has a correspondence relationship with synchronization signal blocks and/or CSI-RS.

12. The method according to any one of claims 9-11, wherein the first message comprises a first preamble, and the priority of the random access procedure has a correspondence relationship with the first preamble.

13. The method according to claim 12, wherein the first message further comprises the uplink transmission resource, the uplink transmission resource is used for transmitting a first uplink data channel.

14. The method according to any one of claims 9-13, wherein the first configuration information is used for the terminal device to determine a target uplink transmission resource corresponding to a target random access procedure based on a priority of the target random access procedure, and send the first message by using the target uplink transmission resource.

15. The method according to any one of claims 9-14, wherein sending, by the network device, the first configuration information to the terminal device comprises:
sending, by the network device, the first configuration information to the terminal device through a system message.

16. The method according to any one of claims 9-14, wherein sending, by the network device, the first configuration information to the terminal device comprises:
sending, by the network device, the first configuration information to the terminal device through dynamic signaling or semi-static signaling.

17. A resource configuration device, comprising:
a receiving unit configured to receive first configuration information sent by a network device, the first configuration information comprising resource configuration information of at least one uplink transmission resource, the at least one uplink transmission resource being used for transmitting a first message during a random access procedure, wherein the at least one uplink transmission resource is configured based on a priority of the random access procedure.

18. The device according to claim 17, wherein the priority of the random access procedure is determined based on at least one of a random access event, a delay parameter, and a service type.

19. The device according to claim 17 or 18, wherein the first configuration information has a correspondence relationship with synchronization signal blocks and/or CSI-RS.

20. The device according to any one of claims 17-19, wherein the first message comprises a first preamble, and the priority of the random access procedure has a correspondence relationship with the first preamble.

21. The device according to claim 20, wherein the first message further comprises the uplink transmission resource, the uplink transmission resource is used for transmitting a first uplink data channel.

22. The device according to any one of claims 17-21, wherein the device further comprises:
a determining unit configured to determine a target uplink transmission resource corresponding to a target random access procedure based on the priority of the target random access procedure and the first configuration information; and
a sending unit configured to send the first message by using the target uplink transmission resource.

23. The device according to any one of claims 17-22, wherein the receiving unit is configured to receive, through a system message, the first configuration information sent by the network device.

24. The device according to any one of claims 17-22, wherein the receiving unit is configured to receive, through dynamic signaling or semi-static signaling, the first configuration information sent by the network device.

25. A resource configuration device, the device comprising:
a sending unit configured to send first configuration information to a terminal device, the first configuration information comprising resource configuration information of at least one uplink transmission resource, the at least one uplink transmission resource being used for transmitting a first message during a random access procedure, wherein the at least one uplink transmission resource is configured based on a priority of the random access procedure.

26. The device according to claim 25, wherein the priority of the random access procedure is determined based on at least one of a random access event, a delay parameter, and a service type.

27. The device according to claim 25 or 26, wherein the first configuration information has a correspondence relationship with synchronization signal blocks and/or CSI-RS.

28. The device according to any one of claims 25-27, wherein the first message comprises a first preamble, and the priority of the random access procedure has a correspondence relationship with the first preamble.

29. The device according to claim 28, wherein the first message further comprises the uplink transmission resource, the uplink transmission resource is used for transmitting a first uplink data channel.

30. The device according to any one of claims 25-29, wherein the first configuration information is used for the terminal device to determine a target uplink transmission resource corresponding to a target random access procedure based on a priority of the target random access procedure, and send the first message by using the target uplink transmission resource.

31. The device according to any one of claims 25-30, wherein the sending unit is configured to send the first configuration information to the terminal device through a system message.

32. The device according to any one of claims 25-30, wherein the sending unit is configured to send the first configuration information to the terminal device through dynamic signaling or semi-static signaling.

33. A terminal device, comprising: a processor and a memory, the memory being used for storing a computer program, and the processor being used for calling and running the computer program stored in the memory to execute the method according to any one of claims 1-8.

34. A network device, comprising: a processor and a memory, the memory being used for storing a computer program, and the processor being used for calling and running the computer program stored in the memory to execute the method according to any one of claims 9-16.

35. A chip, comprising: a processor for calling and running a computer program from a memory to enable a device provided with the chip to execute the method according to any one of claims 1-8.

36. A chip, comprising: a processor for calling and running a computer program from a memory to enable a device provided with the chip to execute the method according to any one of claims 9-16.

37. A computer readable storage medium for storing a computer program that enables a computer to execute the method according to any one of claims 1-8.

38. A computer readable storage medium for storing a computer program that enables a computer to execute the method according to any one of claims 9-16.

39. A computer program product, comprising computer program instructions that enable a computer to execute the method according to any one of claims 1-8.

40. A computer program product, comprising computer program instructions that enable a computer to execute the method according to any one of claims 9-16.

41. A computer program enabling a computer to execute the method according to any one of claims 1-8.

42. A computer program enabling a computer to execute the method according to any one of claims 9-16.
